# EUROPEAN PATENT SPECIFICATION

(11) **EP 2 698 961 B1**
(45) Date of publication and mention of the grant of the patent: **17.12.2014**
(21) Application number: 12290265.3
(22) Date of filing: 01.08.2012
(51) Int. Cl.: H04L 29/06, H04L 12/24, H04L 12/721, H04L 12/715

(54) **Method, system and devices for securing traffic on a traffic path in a computer network**
Verfahren, System und Vorrichtungen zur Sicherung vom Verkehr auf einem Verkehrspfad in einem Computernetzwerk
Procédé, système et dispositifs pour sécuriser le trafic sur une voie de trafic dans un réseau informatique

(43) Date of publication of application: 19.02.2014
(73) Proprietor: ALCATEL LUCENT, 92100 Boulogne-Billancourt (FR)
(72) Inventor: Donadio, Pasquale, 80127 Napoli (IT)
(74) Representative: Wetzel, Emmanuelle

(56) References cited:
- JP VASSEUR ET AL: "Path Computation Element (PCE) Communication Protocol (PCEP); rfc5440.txt", PATH COMPUTATION ELEMENT (PCE) COMMUNICATION PROTOCOL (PCEP); RFC5440.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065509, [retrieved on 2009-03-06]
- FARREL OLD DOG CONSULTING J-P VASSEUR CISCO SYSTEMS A ET AL: "A Path Computation Element (PCE)-Based Architecture; rfc4655.txt", 20060801, 1 August 2006 (2006-08-01), XP015047407, ISSN: 0000-0003
- BRUNO VIDALENC ET AL: "Proactive fault management based on risk-augmented routing", GLOBECOM WORKSHOPS (GC WKSHPS), 2010 IEEE, IEEE, PISCATAWAY, NJ, USA, 6 December 2010 (2010-12-06), pages 481-485, XP031859260, ISBN: 978-1-4244-8863-6
- HUZAIFA AL NAHAS ET AL: "Proactive mitigation of impact of wormholes and sinkholes on routing security in energy-efficient wireless sensor networks", WIRELESS NETWORKS ; THE JOURNAL OF MOBILE COMMUNICATION, COMPUTATION AND INFORMATION, KLUWER ACADEMIC PUBLISHERS, DO, vol. 15, no. 4, 29 August 2007 (2007-08-29), pages 431-441, XP019691055, ISSN: 1572-8196
- ZHAOYU LIU ET AL: "A dynamic trust model for mobile ad hoc networks", DISTRIBUTED COMPUTING SYSTEMS, 2004. PROCEEDINGS. FTDCS 2004. 10TH IEE E INTERNATIONAL WORKSHOP ON FUTURE TRENDS OF SUZHOU, CHINA 26-28 MAY 2004, PISCATAWAY, NJ, USA,IEEE, 26 May 2004 (2004-05-26), pages 80-85, XP010712148, DOI: 10.1109/FTDCS.2004.1316597 ISBN: 978-0-7695-2118-3

## Description

### Field of the invention

The disclosure relates to computer networks, and more particularly to a method for securing traffic on a traffic path in a computer network.

### Background

With the increasing popularity of cloud networks rapidly growing, cloud network services are susceptible to intrusion and malicious attack footprints. Thus, providing security from intrusion and malicious attack is important for protection and successful operation of a cloud network.

JP. Vasseur et al: rfc5440.txt discloses a Path Computation Element (PCE) Communication Protocol (PCEP).

A. Farrel Old Dog Consulting J.-P. Vasseur Cisco Systems A et al: rfc4655.txt discloses a Path Computation Element (PCE)-Based Architecture.

Bruno Vidalence et al: GLOBECOM Workshops (GC Wkshps), 2010 IEEE, 6 Dec. 2010, Pages 481 - 485 ISBN 978-1-4244-8863-6 discloses a proactive fault management based on risk augmented routing.

### Summary of Some Embodiments

The invention is defined in the independent claims. Various embodiments provide a method and apparatus for securing traffic on a traffic path in a computer network as described by the subject matter of the independent claims. Advantageous embodiments are described in the dependent claims.

In some embodiments, the method for securing traffic on a traffic path from a first node of a first domain to a second node of a second domain of a computer network includes: receiving, by an analysis device of the computer network, data indicative of an intrusion attempt to at least one part of the traffic path, determining if a rectification action is required for the computing network based on the received data, and automatically, and/or with user interaction, requesting by the analysis device a secure path for the traffic as an alternative of the traffic path based on a determination that the rectification action is required, wherein the request causes transmission by the analysis device of a message that indicates the at least one part of the traffic path to be secured and a security level value of at least a plurality of computer elements of the computer network for computing the secure path for the traffic linking the first node to the second node through one or more computer elements of the at least a plurality of computer elements, wherein the security level value is indicative of the vulnerability of the computer element security.

Said embodiments may be advantageous in that they provide a real-time reaction system to intrusion attempt to traffic path on computer networks. This may permit a continuous monitoring of network resources with recovery strategies which maximizes the security of the network infrastructure by limiting potential damages to minimum.

Another advantage may reside in providing a centralized approach for setting security parameters such as security level weights as the way to drive the path-recovery process. The setting of the parameters may be based on a wide view of the topology and traffic of the network.

Another advantage may reside in that a set of performance objective for the computer network may be defined and fulfilled making use of security level configuration for adapting the routing of the traffic.

Another advantage may be that the present method may enhance the legacy Intrusion Detection Systems (IDS) basic principles including a set of functionalities which permits the reconfiguration of the cloud infrastructure on a security basis.

According to one embodiment, the request is performed using a path computation element protocol and/or a virtual machine protocol.

According to one embodiment, the method comprises: assigning a ranking value to each computer element of the at least a plurality of computer elements based on the frequency with which each computer element of the computing network is intruded, and determining the security level value of each computer element of the at least a plurality of computer elements in accordance with the ranking value, wherein the lower the frequency is the higher the security level value becomes.

According to one embodiment, the method comprises determining a first and a second security level threshold, computing an intermediate set of possible paths from the first node to the second node, wherein each computer element of each path of the set paths has a security level value higher than the first threshold value, calculating for each path of the set of paths the sum of security level values of each computer element of the path, selecting a subset of paths of the set of paths, wherein each path of the subset of paths has the calculated sum higher than the second threshold value, calculating for each path of the subset of paths an accumulative delay for conducting the traffic from the first node to reach the second node, selecting as the secure path from the subset of paths a path having the lowest accumulative delay.

According to one embodiment, the method steps are executed during the intrusion attempt and/or after the intrusion attempt is finished.

According to one embodiment, the method further comprises identifying one or more intrusion detection systems to capture data transmitted on the computer network, and selecting at least one intrusion detection system of the one or more intrusion detection systems, wherein the data indicative of the intrusion attempt is received from the selected at least one intrusion detection system.

According to one embodiment, the method further comprises: storing intrusion signatures of previous intrusions to previous traffic paths in a database, for each of the intrusion signatures associating at least one rectification action signature, wherein the rectification action signature indicates the requirement of the rectification action, matching the received data with the intrusion signatures, and in case of a positive match, determining if the requirement of the rectification action is indicated in the matched rectification action signature.

According to one embodiment, the request is received at a path computation client, wherein the first and second domains are part of multiple domains of the computer network, wherein at least one domain of the multiple domains comprises a path computation element, the method further comprising at the path computation client: upon receiving the request, generating, a Path Computation Request (PCReq) message , wherein the PCReq message is the message, selecting a path computation element with minimal actual utilization of computing resources from the at least one path computation element, sending, via an application program interface, the PCReq message to the selected path computation element.

According to one embodiment, the PCReq message header comprises an indicator which indicates the request, the method further comprising at the path computation element: based on a determination that the indicator is indicative of the request reading from the PCReq message the security level value of each computer element of the computer network, performing the computation of the secure path, sending to the path computation client a Path Computation Response (PCRep) message indicative of the computed path for redirecting the traffic according to the secure path.

According to one embodiment, the method of anyone of previous embodiments is provided as a service in a cloud computing environment.

Various embodiments relate to a computer program product comprising computer executable instructions to perform the method steps of the method of any one of the preceding embodiments.

Various embodiments relate to a path computation element, for use with a path computation client of as described in the below embodiment, for computing a secure traffic path between a first node of a first domain and a second node of a second domain of a computer network, the path computation element being adapted for:
- receiving, from the path computation client, a PCReq message indicative of at least one part of a traffic path from the first to second node to be secured and a security level value of each computer element of the computer network, wherein the PCReq header comprises an indicator which indicates a request of the secure traffic path,
- based on a determination that the indicator is indicative of the request:
   - reading from the PCReq message the security level value of each computer element of the computer network,
   - computing the secure path from the first node to the second node using the security level value of each computer element of the computer network,
   - sending a Path Computation Response (PCRep) message indicative of the computed path.

Various embodiments relate to a path computation client of a computer network, the computer network comprising multiple domains and an analysis device, at least one domain of the multiple domains comprising a path computation element, the path computation client being adapted for:
- receiving a request from the analysis device for a secure traffic path as an alternative of a traffic path from a first node of a first domain to a second node of a second domain of the multiple domains,
- generating a Path Computation Request (PCReq) message indicative of at least one part of the traffic path to be secured and a security level value of at least a plurality of computer elements of the computer network contained in the received request, wherein a PCReq header comprises an indicator which indicates the request,
- setting the indicator to indicate the request,
- selecting a path computation element with minimal actual utilization of computing resources from the at least one path computation elements,
- sending, to the selected path computation element, the PCReq message.

Various embodiments relate to an analysis device for securing traffic on a traffic path from a first node of a first domain to a second node of a second domain of a computer network, the analysis device being adapted for:
- receiving data indicative of an intrusion attempt to at least one part of the traffic path;
- determining if any rectification action is required for the computing network based on the received data;
- requesting a secure path for the traffic as an alternative of the traffic path based on a determination that the rectification action is required, wherein the request causes transmission of a message that indicates the at least one part of the traffic path to be secured and a security level value of at least a plurality of computer elements of the computer network for computing the secure path for the traffic linking the first node to the second node through one or more computer elements of the at least a plurality of computer elements, wherein the security level value is indicative of the vulnerability of the computer element security.

It is understood that one or more of the aforementioned embodiments may be combined as long as the combined embodiments are not mutually exclusive.

### Brief description of the drawings

In the following, preferred embodiments will be described in greater detail by way of example only making reference to the drawings in which:
- Fig. 1: illustrates a system architecture for the execution of a method for securing traffic on a traffic path,
- Fig. 2: illustrates another system architecture for the execution of a method for securing traffic on a traffic path,
- Fig. 3: shows a diagram flow of the secure plane workflow, started when a system Intrusion is detected on a well defined probe, and
- Fig. 4: shows a diagram flow of the secure path calculation process.

### Detailed description

In the following, like numbered elements in these figures are either similar elements for perform an equivalent function. Elements which have been discussed previously will not necessarily be discussed in later figures if the function is equivalent.

It is understood In advance that although this disclosure includes a detailed description on cloud computing, implementation of the teachings recited herein are not limited to a cloud computing environment. Rather, embodiments of the present disclosure are capable of being implemented in conjunction with any other type of computing environment now known or later developed.

The term "domain" as used herein, refers to one or more nodes running a common instance of a routing protocol.

The term "computer element" as used in this application can be any node in a network, such as a terminal, microcomputer, personal computer, router, tape drive, or processor.

The term "cloud computing" as used herein may refer to a model for enabling ubiquitous, convenient, on-demand network access to a shared pool of configurable computing resources (e.g., networks, servers, storage, applications, and services) that can be rapidly provisioned and released with minimal management effort or service provider interaction.

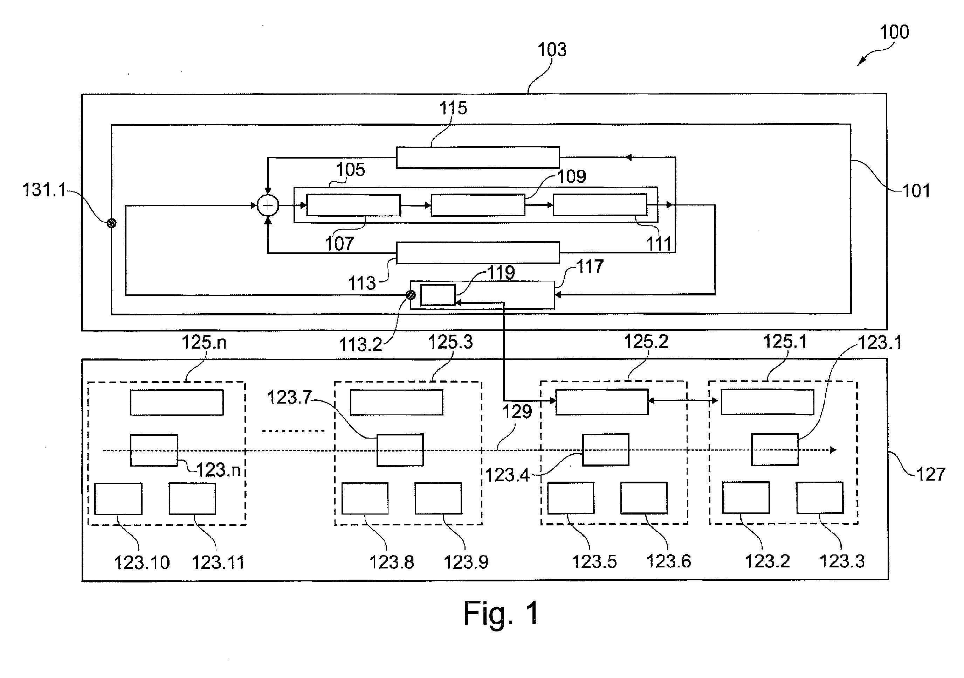

Fig. 1 depicts proposed system architecture 100 operable to execute a process for securing traffic on a traffic path of a computer network in a cloud computing environment. The system 100 provides a computer network 127 having a plurality of separate domains 125. A domain 125 may be for example an MPLS network domain and/or an IT domain. Each domain 125 comprises one or more nodes 123. In an IT domain, the node 123 may be a virtual machine 223. In the network context, the node 123 may be a router such as a Label Switched Router (LSR) through which client communications, such as MPLS packetized data, can pass into and out of the domain.

As illustrated, traffic path 129 is an exemplary path between two end-points: 123.1 and 123.n. A customer may define the source and the destination of a traffic path 129, while the intermediate nodes may be defined following the provider criteria.

The traffic path 129 may consist of a sequence of intermediate nodes along the path from source end-point 123.1 to destination end-point 123.n. Each intermediate node along the path may be identified by any unicast address associated with its interfaces, such as an IPv4, and IPv6 or an S-PE address.

The term "node" as used herein refers to a virtual machine and/or any network device that receives and forwards data packets from one location to another.

The system 100 further comprises a security plane 101. Each instance of the security plane may be integrated inside a cloud middleware 103 and communicates with the different domains via a secure Application Programing Interface (API) 117.

The idea behind the security plane 101, is based on the definition of a distributed traffic analyzer that controls, on top of a cloud domain, computational resources and log messages in order to performs the related security corrections, in real-time. Security plane instance may run independently and monitor local activities. It may detect intrusion from local traces and initiate response. If anomaly is detected in the local data, or if the evidence is inconclusive, the neighboring security planes connected to the cloud performs, in a first time, some actions on the infected domain that may involve first the infected node and then the neighboring nodes.

The term "intrusion" as used herein refers to a malicious set of actions that attempt to compromise and/or violate confidentiality, integrity and/or availability of a resource. The intrusion attempt may affect a link and/or at least one node of the at least one part of the traffic path. For example, an intruder may intercept transmitted data over a link of the at least one part of the traffic path using for example mallcious sniffers. In another example, an intrusion to a node may be an unauthorized gain of root level access and the resulting steal of information.

The security plane may be composed by a set of distributed cloud services that communicates through a Service Oriented Interface approach. The security plane 101 is composed of an analysis device 105 and Monitoring 113, Management 115, and secure API 117 modules. The analysis device 105 is composed of Analysis 107, Decision 109, Action 111, modules.

The analysis module 107 may receive data indicative of an intrusion attempt to at least one part of the traffic path 129, which is useful to the decision module 109 to take automatic-adaptive decisions adjustment, and associated actionable responses. An example of the intrusion attempt is an action that may compromise the availability of a computer element by an overwhelming number of service requests over a short period of time which may make services unavailable to end-users. Also, compromised nodes also may launch attacks from within a network.

The at least one part of the traffic path may be formed, for example, of a link or communication path between two nodes and the nodes positioned along the path.

The decision module 109 may determine if a rectification action is required for the computing network based on the received data.

A rectification action may be effectuated with an automated response taken by the analysis device. The analysis device may use a knowledge base, logged by monitoring service 113, containing accumulated experience and a set of rules for applying the knowledge base to each particular situation described by an intrusion signature in the received data. The rectification action may be indicative of "no-reaction" and/or reaction. The reaction may be divided into various categories of severity such as low, medium and high severity.

For example, an intrusion that compromises the integrity of a computer element by gaining root level access may require a rectification action of high severity. This rectification action may be obtained from pre-defined operational modes of the computer networks.

As example of rectification action of low severity, may be required for an intrusion which is not malicious, or does not make consequences on the security of the whole system (e.g. the intrusion is the tentative to ping an IP remote address and the soft reaction (or rectification action of low severity) is the IP address obfuscation).

For example, the decision module 109 may match the received data with intrusion signatures of previous intrusions to previous traffic paths. Each of the intrusion signatures is associated with at least one rectification action signature. In case of a positive match, the decision model 109 may determine if a requirement of the rectification action is indicated in the matched rectification action signature.

The action module 111 may represent the actuator that solves the intrusion detection situation on a cloud domain. The action module 111 uses the results from the analysis, in order to manage the cloud infrastructure on a security basis.

In response to the intrusion detection and analysis, the action module 111 may take a real-time decision based on whether the rectification action is required and then automatically request a secure path as an alternative to the infected traffic path 129. The rectification action may be indicative of "no-reaction" and/or a reaction which may be divided into various categories of reaction severity such as low, medium and high severities.

The secure path may be the path by which traffic is restored after the occurrence of the intrusions. The secure path may be a sequence of secure links between every pair of nodes able to establish secure communication between them. The secure communication may be achieved using the security level value of the computer element.

The request is transmitted via a message that indicates the at least one part of the traffic path to be secured and a security level value of at least a plurality of computer elements of the computer network. This is for computing the secure path for the traffic linking the source end-point to the destination end-point through one or more computer elements of the at least a plurality of computer elements. The security level value is indicative of the vulnerability of the computer element security. In addition, the action module 111 may also generate alarms, reports and queries.

The request may be performed using a path computation element protocol and/or a virtual machine protocol.

The Virtual Machine protocol comprises a set of rules that may permit the dynamic configuration of the virtual machines resources (e.g. information technology (IT) resource aggregation and partition). For example, each virtual machine may have its own proprietary protocol to manage the physical resources from a remote desktop (e.g. Microsoft, VMWARE). However, persons of ordinary skill in the art having benefit of the present disclosure should appreciate that other embodiments may utilize other standards and/or protocols, as well as different releases thereof.

This may be advantageous in that the method of the present disclosure may be implemented in various classes of routing protocols that take specified traffic attributes into account when making routing or communication links decisions.

The security level value of a computer element may be defined as the percentage ratio of its intrusion frequency compared to the highest intrusion frequency of all the at least a plurality of computer elements. That is, the higher the number of intrusions to a computer element during a predetermined period, the more likely the computer element is to be the target of a future attack. This may provide a reliable estimate of the security level of each computer element.

In another example, the security level value may be defined as the trusty and reliability ratio assigned to the computer element from the adjacent ones.

In another example, the security level value of the computer element may be defined as the rejection ratio (fraction) to the intrusion attack, intended as the capacity to react or not to a well-defined malicious attack.

The monitoring module 113 may capture continuously processed data of previous events, such as historical intrusion data and login attempts. Each event is time stamped and stored in a sequential file sorted initially by time. The raw data captured by the monitoring module 113 assist the analysis service 107 to build a complete event correlation map, suitable for decision adjustment and actionable response calculation. For that, the monitoring module 113 may store intrusion signatures of previous intrusions to previous traffic paths in a database and associate to each of the intrusion signatures at least one rectification action signature. The rectification action signature indicates the requirement of the rectification action.

To access data in the monitoring module database, a Query Based Search Engine (QBSE) that permits to extract data from the monitoring module 113 is defined. The QBSE treats queries may have the following format:

| |
|---|
| <hostname>:<query- |
| port>/?pattern=<name>&filter=<expr>&start=<ts>&end=<ts> |

Where:
   ∘ <hostname> is the name of the monitored host
   ∘ <query-port> is the port where the packet analysis should start
   ∘ <pattern> represents the type of analysis planned. Possible values are: traffic, flows, protocols, ports, tuples and applications.
   ∘ <expr> is the query expression. Keywords are: format, filter, status, start, end, wait, time (<ts> is a unix-style timestamp that specifies that time window of interest).

As example, to read all data captured by the traffic pattern on the remote device reachable to the IP address 151.98.22.22 on port 1234, in the time slice 10-10:30 it's useful the following query:

| |
|---|
| 151.98.22.22:1234/?pattern=traffic&start=<10:00>&stop=<10:30> |

The management module 115 may permit to configure and tune the service plane 101 connected to the cloud infrastructure. It acts as a service plane manager, which may permit to configure, update and control the complete set of services running in the service plane instance.

The management module 115 may identify one or more intrusion detection systems 131 (e.g. sniffers) to capture data transmitted on the computer network and select at least one intrusion detection system of the one or more intrusion detection systems 131. The intrusion detection system may be a sniffer and/or a probe. More than one probe or sniffers may be required in order to detect the entire data conveyed by the nodes in a network. For example, the intrusion detection systems 131 may control computational resources and log messages. They may detect signs of intrusion locally and independently in a single node, but neighboring nodes can also be used collaboratively to investigate in a broader range. These sniffers 131 may detect known attacks as well as novel and unknown attacks. To detect unknown attacks, the sniffers 131 may use anomaly detection which treats any action that is not defined to be statistically normal network behavior as an attack or intrusion. The data indicative of the intrusion attempt is received from the selected at least one intrusion detection system.

Sniffers 131 may be located at different sniffing points in the system 100, for example:
∘ Secure API, that allows the analysis of packets coming from the Secure API
∘ Physical Network, that allows the analysis of packets coming from the physical network interface
∘ Control Plane, that allows the analysis of packets coming from the Control Plane
∘ Security Plane, that allows the analysis of packets coming from other services of the Secure Plane.

The secure API 117 may represent the generalized interface of the secure plane instantiation. It may be used by other secure plane instantiations and network domains. It is used for the access to the network resources and their characteristics discovery, the provisioning and configuration of resources, the monitoring and the decommissioning of physical resources. The main functionalities offered by the secure API 117 are the following:
∘ Synchronization: It is used to retrieve info by the available network resources
∘ Provisioning: Allows the configuration of network resources
∘ Monitoring: Allows monitoring of network or IT resources in terms of status, security degree etc.
∘ Release: Allows the release of already configured physical resources.

The secure API 117 may treat messages suitable to reconfigure both the IT infrastructure and the network Infrastructure.

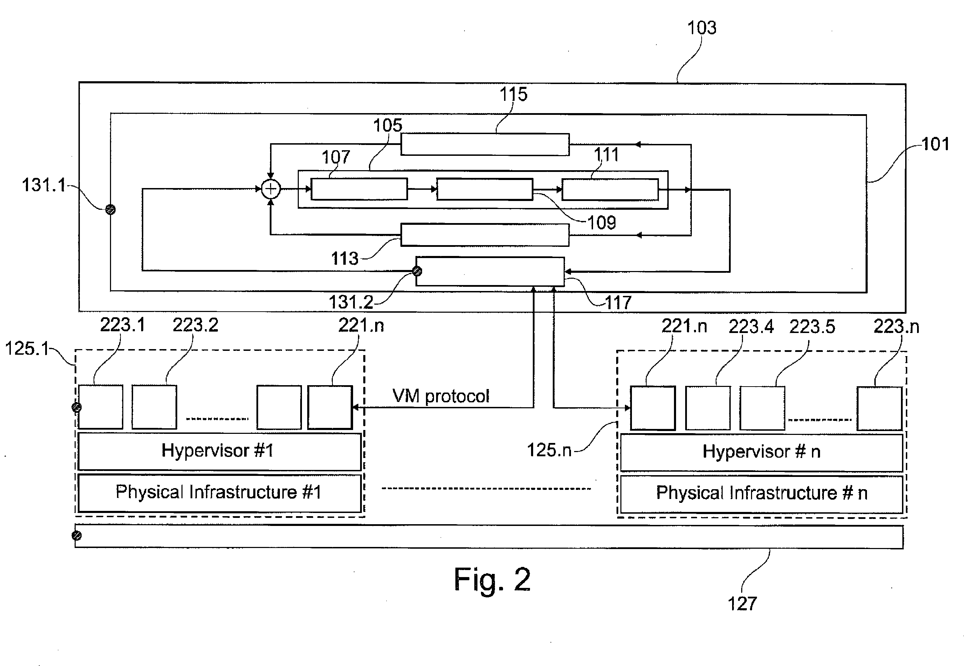

In the IT Infrastructures, the secure API messages are exchanged with a VM manager 221 as shown in Fig. 2.

In the network context (e.g. an MPLS network), the secure API messages are transformed in Path Computation Element Protocol messages, in order to traduce the actions calculated by the security plane 101, In management actions on the network, via Path Computation Client (PCC) 119/Path Computation Element (PCE)121 standard chain.

This may be advantageous as it may permit the applicability of Multiprotocol Label Switching (MPLS) to traffic engineering of the present method by providing an extension of the PCEP protocol in support of the computation of the secure path. These extensions complete the set of messages, objects and type-length-values (TLVs), already defined in existing IETF RFCs and Internet Drafts, which constitute the reference PCEP protocol information set, to be typically applied in network control environments.

The secure path request message is generated by the PCC 119 as Path Computation Request (PCReq) message destined to one PCE (e.g. 121.1) of the multiple domains 125. The PCE (e.g. 121.1) is selected based on its minimal actual utilization of computing resources. The PCC 117 further sends, via the API 117, the PCReq message to the selected PCE (e.g. 121.1).

In order to cover the functionalities related to the inter-domain and intra-domain security routing, signalling and provisioning, the proposed architecture may require an extension of the Path Computation Element Protocol (PCEP). That is, the format of the PCReq message may be changed as follows:

```
 <PCReq Message>::= <Common Header>
 |<svec-list>|
 <request-list>
 where:
 <svec-list>::=<SVEC>|<svec-list>|
 <request-list>::=<request>|<request-list>|
 <request>::= <RP>
            <END-POINTS>
            |<LSPA>|
            |<BANDWIDTH>|
            |<metric-list>|
            |<RRO>|<BANDWDTH>||
            |<IRO>|
            |<LOAD-BALANCING>|
```

The PCReq message header comprises an indicator which indicates the request of the secure path. For example, the security request is identified by a new flag in the Request Parameter (RP) object, i.e. the security Bit. The indicator may be one or more bits that identify the rectification action. For example; in case the rectification action is indicative of "no-reaction" each bit of the one or more bits is set to a value 0, while in case the rectification action is indicative of a high reaction severity each bit of the one or more bits is set to a value 1.

The PCC 119 requesting the PCE for a secure route computation will set the security bit (**S** bit) in the corresponding RP object in the PCReq message. The proposed solution is interoperable with the actual one: since all the other PCReq objects and parameters are left unchanged, the secure computation constraints and parameters are similar to the ones defined for standard path computations.

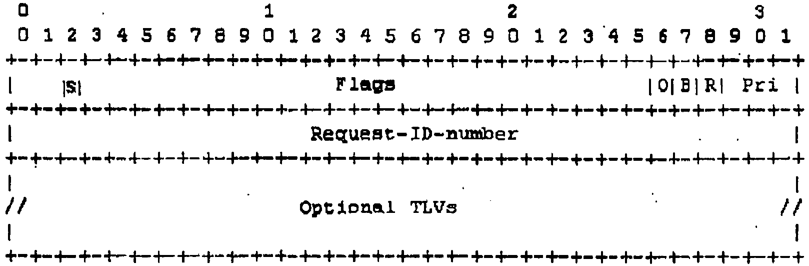

The PCE, after receiving the PCReq message indicative of the request of the secure path, reads from the PCReq message the security level value of each computer element of the at least a plurality of computer elements of the computer network. For example, when the PCE receives the PCReq message it checks the security bit in the RP object to distinguish between a security computation and a standard path computation. When the security bit is set, the PCE computes an alternative traffic path to the infected traffic path for the given endpoints by also calculating the respective route taking in account of the security level according to the constraints specified by the PCC in terms for example of end points, bandwidth, metrics, load balancing etc. and the policies configured within the PCE.

In case the security bit is set but the PCE does not support the security computation, it must return a PCErr message with Error-Type = "Capability not supported". To perform the path computation, the PCE uses a traffic engineering database TED. Information included in the TED are related to security level values, available network resources such as network topology, nodes and links status, connectivity, available bandwidth and security constraint, etc.; all these information are stored in the TED, which in this model is built from information distributed by the routing protocol (OSPF-TE).

The PCE may determine a first and a second security level threshold, compute an intermediate set of possible paths from the first node to the second node, wherein each computer element of each path of the set paths has a security level value higher than the first threshold value, calculate for each path of the set of paths the sum of security level values of each computer element of the path, select a subset of paths of the set of paths, wherein each path of the subset of paths has the calculated sum higher than the second threshold value, calculating for each path of the subset of paths an accumulative delay for conducting the traffic from the first node to reach the second node, and select as the secure path from the subset of paths a path having the lowest accumulative delay.

The first and second security threshold values may be defined in accordance with the category of the reaction severity required by the rectification action. For example, the low and medium reactions severities are associated with the same first threshold value, but different second threshold values. The second threshold value for the medium level may be higher than the second threshold value for the low level, which means that the size of the subset for the medium level is smaller than the size of the subset for the low level.

The subset of paths of the set of paths comprises all paths satisfying the security criterion required by the analysis device. These features may be advantageous as they provide an appropriate balance between a secure and efficient system.

The PCE may then send to the path computation client a Path Computation Response (PCRep) message indicative of the computed path for redirecting the traffic according to the secure path.

The format of a PCRep message may be changed as follows

```
<PCRep Massage> ::= <Common Header>
              <response-list>
  where:
  <response-list>::-<response>[<response-list>]
  <response>::-<RP>
            [<NO-PATH>]
            [<attribute-list>]
            [<path-list>]
    <path-list>::=<path>[<path-list>]
    <path>::= <ERO><attribute-list>
    where:
    <attribute-list>::=[<SECURITY-INFO-list>]
           [<LSPA>]
           [<BANDWlDTH>]
           [<metric-list>]
           [<IRO>]
     -<metric-list>::=<METRIC>[<metric-list>]
     <SECURITY-INFO-List>::-<SECURITY-LEVEL>[SECURITY-INFO-list]
```

The PCE may be run on a LSR router (head, end or adjacent), on board of a Network Management System (NMS), or on a dedicated server.

As indicated in the figure above, the security info list extends the attribute list including the actual value of the security level. Other possible parameters of the security-info-list are the historical values of the SL. As example:
- LastSecurityLevel
- MinSecurityLevel
- MaxSecurityLevel.

The method steps described above may be executed during the intrusion attempt and/or after the intrusion attempt is finished. For example, for a high reaction severity the analysis device 105 may react during the intrusion attempt, while for a low reaction severity it may react after the intrusion attempt is finished. This may provide a flexible reaction method that may depend on the type of the intrusion attempt.

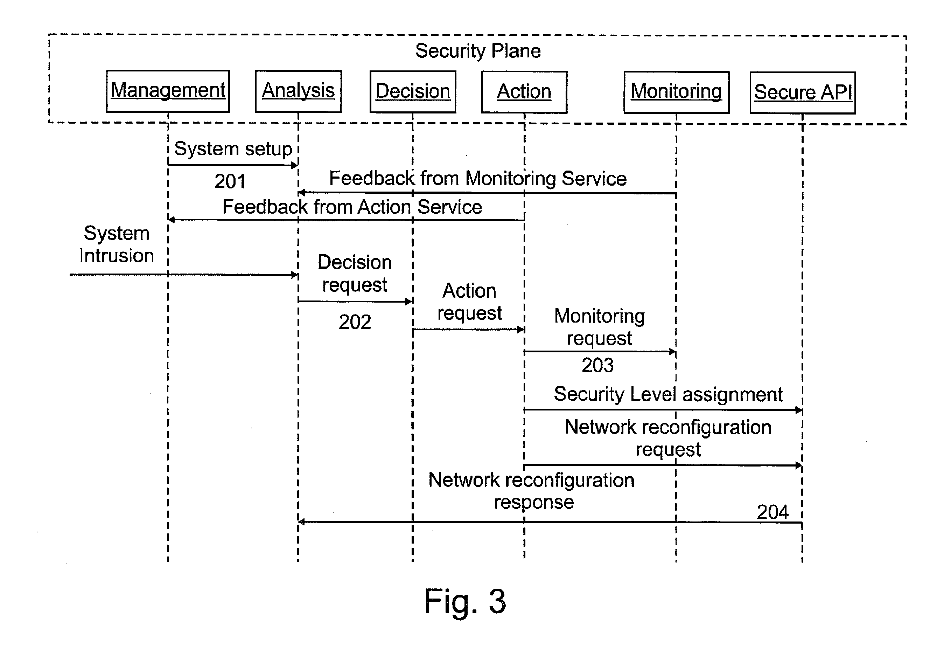

Fig. 3 shows the Secure Plane workflow, started when a system intrusion is detected on a well-defined probe.

In step 201, a synchronization phase is started for configuring the analysis service, launching the appropriate sniffer defining the appropriate probe (e.g. Secure API, Physical Network, Control Plane, Data Plane, and Security Plane). During this phase the analysis service receives feedbacks from the monitoring service about previous events logged. During this phase, the management service also receives feedbacks from the action service in order to adjust in adaptive way the configuration of the Analysis service (3) (modulate the granularity of the sniffers, choosing the most appropriate one, polling period)

When a system intrusion occurs, the Analysis-Decision-Action chain calculates, in step 202, the corrective actions needed to isolate the infected network infrastructure e.g. at least one part of the traffic path.

In step 203 corrective actions calculated during the previous step are traduced in network reconfiguration requests, flooded to the Control Plane (via PCEP protocol to the Path Computation Element acting a path computation request). During this step the security plane assigns the security level to the monitored resources, using statistical trust considerations. At the same time the monitoring service is updated with new info to store and submit to the analysis service as feedback.

In step 204, the path computation response of the PCEP protocol is traduced in a network reconfiguration response used as feedback to the Analysis service.

The analysis module 107 may use this info to be sure that the last network reconfiguration action was completed successfully and may perform new actions on the network if are needed.

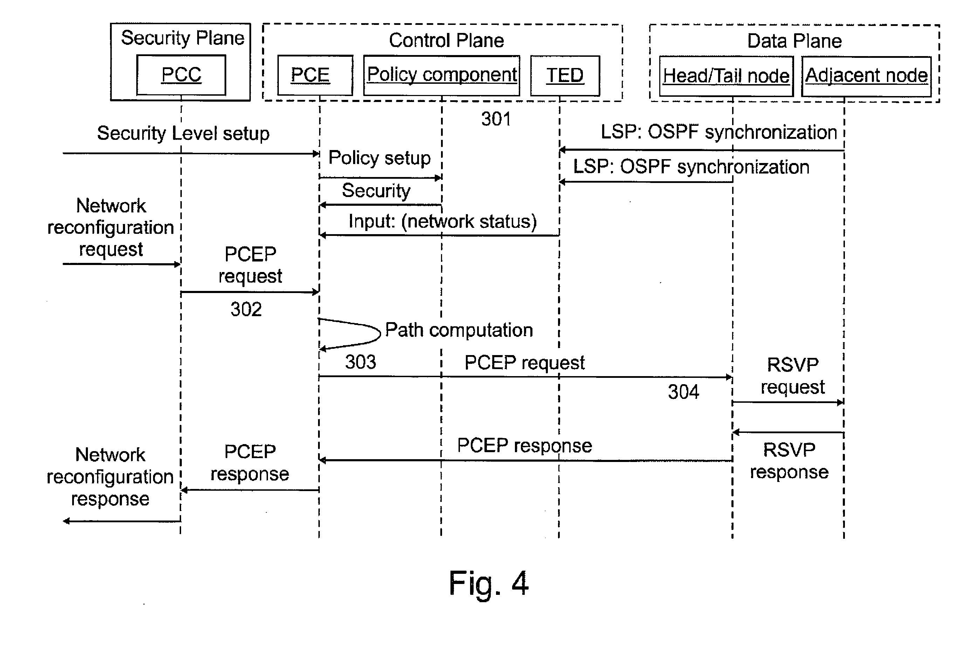

Fig. 4 shows the secure path calculation process, started by the security plane, via PCC request.

In step 301, a synchronization phase is started for populating the part of the database used for determining, once it is needed, the correct route of the data over the network. This step is divided in two independent actions:
- Security Policy setup: used for spreading the policy admission and security constraint that involves the part of the network under analysis (i.e. security bit active).
- Security Level setup: used to store inside the PCE the SL value (calculated during the step 203 of the secure plane workflow) of each network resource included In the Traffic Engineering Database (TED).

Once the Security Plane receives a service request, it determines, in step 302, which PCE is able to satisfy it; The request is analyzed by the PCE, with the information that are contained in the TED and the Secure Levels associated to each managed resource (such information are filled by the Step 301 phase).

On the basis of the information received the PCE calculates, in step 303, a new path.

In step 304, the PCE sends it to the head node of the chain for starting the Resource Reservation Protocol (RSVP) reservation phase.

### List of reference numerals

- 100: system
- 101: security plane
- 103: cloud middleware
- 105: analysis device
- 107: analysis service
- 109: decision service
- 111: action service
- 113: monitoring service
- 115: management service
- 117: secure API
- 119: PCC
- 121: PCE
- 123: node
- 125: domain
- 127: computer network
- 129: traffic path
- 131: sniffer
- 221: VM manager
- 223: VM machine

## Claims

1. A method for securing traffic on a traffic path (129) from a first node (123.1) of a first domain (125.1) to a second node (123.n) of a second domain (125.n) of a computer network (127), the method comprising:
- receiving, by an analysis device (105) of the computer network (127), data indicative of an intrusion attempt to at least one part of the traffic path (129);
- determining if a rectification action is required for the computing network (127) based on the received data;
- requesting by the analysis device (105) a secure path for the traffic as an alternative of the traffic path based on a determination that the rectification action is required, wherein the request causes transmission by the analysis device (105) of a message that indicates the at least one part of the traffic path to be secured and a security level value of at least a plurality of computer elements of the computer network (127) for computing the secure path for the traffic linking the first node (123.1)to the second node (123.n) through one or more computer elements of the at least a plurality of computer elements, wherein the security level value is indicative of the vulnerability of the computer element security.

2. The method of claim 1, wherein the request is performed using a path computation element protocol and/or a virtual machine protocol.

3. The method of claim 1 or 2, comprising:
- assigning a ranking value to each computer element of the at least a plurality of computer elements based on the frequency with which each computer element of the computing network (127) is intruded,
- determining the security level value of each computer element of the at least a plurality of computer elements in accordance with the ranking value, wherein the lower the frequency is the higher the security level value becomes.

4. The method of anyone of claims 1-3, comprising:
- determining a first and a second security level threshold,
- computing an intermediate set of possible paths from the first node (123.1) to the second node (123.n), wherein each computer element of each path of the set paths has a security level value higher than the first threshold value,
- calculating for each path of the set of paths the sum of security level values of each computer element of the path,
- selecting a subset of paths of the set of paths, wherein each path of the subset of paths has the calculated sum higher than the second threshold value,
- calculating for each path of the subset of paths an accumulative delay for conducting the traffic from the first node (123.1) to reach the second node (123.n),
- selecting as the secure path from the subset of paths a path having the lowest accumulative delay.

5. The method of anyone of the previous claims, wherein the method steps are executed during the intrusion attempt and/or after the intrusion attempt is finished.

6. The method of claim 1, further comprising:
- identifying one or more intrusion detection systems (131) to capture data transmitted on the computer network,
- selecting at least one intrusion detection system of the one or more intrusion detection systems (131), wherein the data indicative of the intrusion attempt is received from the selected at least one intrusion detection system.

7. The method of claim 1, further comprising:
- storing intrusion signatures of previous intrusions to previous traffic paths in a database, for each of the intrusion signatures associating at least one rectification action signature, wherein the rectification action signature indicates the requirement of the rectification action,
- matching the received data with the intrusion signatures, and
- in case of a positive match, determining if the requirement of the rectification action is indicated in the matched rectification action signature.

8. The method of claim 2, wherein the request is received at a path computation client (119), wherein the first and second domains are part of multiple domains (125) of the computer network, wherein at least one domain of the multiple domains (125) comprises a path computation element (121), the method further comprising at the path computation client (119):
- upon receiving the request, generating, a Path Computation Request , PCReq, message, wherein the PCReq message is the message,
- selecting a path computation element with minimal actual utilization of computing resources from the at least one path computation element,
- sending, via an application program interface, the PCReq message to the selected path computation element.

9. The method of claim 8, wherein the PCReq message header comprises an indicator which indicates the request, the method further comprising at the path computation element (121):
- based on a determination that the indicator is indicative of the request:
• reading from the PCReq message the security level value of each computer element of the computer network,
• performing the computation of the secure path,
• sending to the path computation client (119) a Path Computation Response, PCRep, message indicative of the computed path for redirecting the traffic according to the secure path.

10. The method of anyone of previous claims is provided as a service in a cloud computing environment.

11. A computer program product comprising computer executable instructions to perform the method steps of the method of any one of the preceding claims.

12. A path computation client (119) for a computer network, the computer network comprising multiple domains (125) and an analysis device (105), at least one domain of the multiple domains (125) comprising a path computation element (121), the path computation client (119) being adapted for:
- receiving a request from the analysis device (105) for a secure traffic path as an alternative of a traffic path from a first node (123.1) of a first domain (125.1) to a second node (123.2) of a second domain (125.n) of the multiple domains (125),
- generating a Path Computation Request, PCReq, message indicative of at least one part of the traffic path (129) to be secured and a security level value of at least a plurality of computer elements of the computer network (127) contained in the received request, wherein a PCReq header comprises an indicator which indicates the request,
- setting the indicator to indicate the request,
- selecting a path computation element with minimal actual utilization of computing resources from the at least one path computation element,
- sending, to the selected path computation element, the PCReq message.

13. A system comprising the path computation client of claim 12 and a path computation element (121) for computing a secure traffic path between a first node (123.1) of a first domain (125.1) and a second node (123.n) of a second domain (125.n) of a computer network (127), the path computation element (121) being adapted for:
- receiving, from the path computation client (119), a PCReq message indicative of at least one part of a traffic path (129) from the first (123.1) to second node (123.n) to be secured and a security level value of each computer element of the computer network (127), wherein the PCReq header comprises an indicator which indicates a request of the secure traffic path ,
- based on a determination that the indicator is indicative of the request:
i. reading from the PCReq message the security level value of each computer element of the computer network (127),
ii.computing the secure path from the first node (123.1) to the second node (123.n) using the security level value of each computer element of the computer network (127),
iii. sending a Path Computation Response, PCRep, message indicative of the computed path.

14. An analysis device (105) for securing traffic on a traffic path (129) from a first node (123.1) of a first domain (125.1) to a second node (123.n) of a second domain (125.n) of a computer network (127), the analysis device (105) being adapted for:
a. receiving data indicative of an intrusion attempt to at least one part of the traffic path (129);
b. determining if any rectification action is required for the computing network (127) based on the received data;
c. requesting a secure path for the traffic as an alternative of the traffic path (129) based on a determination that the rectification action is required, wherein the request causes transmission of a message that indicates the at least one part of the traffic path to be secured and a security level value of at least a plurality of computer elements of the computer network (127) for computing the secure path for the traffic linking the first node (123.1) to the second node (123.n) through one or more computer elements of the at least a plurality of computer elements, wherein the security level value is indicative of the vulnerability of the computer element security

## Patentansprüche

1. Verfahren zur Sicherung von Verkehr auf einem Verkehrspfad (129) von einem ersten Knoten (123.1) einer ersten Domain (125.1) zu einem zweiten Knoten (123.n) einer zweiten Domain (125.n) eines Computernetzwerks (127), wobei das Verfahren umfasst:
- Empfangen, an einer Analysevorrichtung (105) des Computernetzwerks (127), von Daten, welche für einen Intrusionsversuch in mindestens einem Teil des Verkehrspfades (129) indikativ sind;
- Ermitteln, auf der Basis der empfangenen Daten, ob eine Rektifikationsmaßnahme für das Computernetzwerk (127) erforderlich ist;
- Anfordern, durch die Analysevorrichtung (105), eines gesicherten Pfades für den Verkehr als eine Alternative zu dem Verkehrspfad auf der Basis einer Ermittlung, dass die Rektifikationsmaßnahme erforderlich ist, wobei die Anforderung die Übertragung, durch die Analysevorrichtung (105), einer Nachricht, welche zumindest einen Teil des Verkehrspfades, der zu sichern ist, und einen Sicherheitsstufenwert mindestens einer Vielzahl von Computerelementen des Computernetzwerks (127) zur Berechnung des gesicherten Pfades für den Verkehr, welcher den ersten Knoten (123.1) über ein oder mehrere Computerelemente der zumindest einen Vielzahl von Computerelementen mit dem zweiten Knoten (123.n) verbindet, angibt, bewirkt, wobei der Sicherheitsstufenwert für die Sicherheitsschwachstelle des Computerelements indikativ ist.

2. Verfahren nach Anspruch 1, wobei die Anforderung unter Verwendung eines Pfadberechnungselement-Protokolls und/oder eines virtuellen Maschinenprotokolls erfolgt.

3. Verfahren nach Anspruch 1 oder 2, umfassend:
- Zuweisen eines Rangwertes an jedes Computerelement der zumindest einen Vielzahl von Computerelementen auf der Basis der Frequenz, mit welcher in ein jedes Computerelement des Computernetzwerks (127) eingedrungen wird,
- Ermitteln des Sicherheitsstufenwertes eines jeden Computerelements der zumindest einen Vielzahl von Computerelementen gemäß dem Rangwert, wobei sich der Sicherheitsstufenwert umso mehr erhöht, je niedriger die Frequenz ist.

4. Verfahren nach einem beliebigen der Ansprüche 1-3, umfassend:
- Ermitteln eines ersten und eines zweiten Sicherheitsstufengrenzwert,
- Berechnen eines Zwischensatzes von möglichen Pfaden von dem ersten Knoten (123.1) zu dem zweiten Knoten (123.n), wobei jedes Computerelement eines jeden Pfades des Satzes von Pfaden eine Sicherheitsstufenwert aufweist, welcher höher ist als der erste Grenzwert,
- Kalkulieren, für jeden Pfad des Satzes von Pfaden, der Summe der Sicherheitsstufenwerte eines jeden Computerelementes des Pfades,
- Auswählen eines Teilsatzes von Pfaden aus dem Satz von Pfaden, wobei die kalkulierte Summer eines jeden Pfades des Teilsatzes von Pfaden höher ist als das zweite Grenzwert,
- Kalkulieren, für jeden Pfad des Teilsatzes von Pfaden, einer kumulativen Verzögerung, um den Verkehr von dem ersten Knoten (123.1) bis zum Erreichen des zweiten Knotens (123.n) zu leiten,
- Auswählen, aus dem Teilsatz von Pfaden, eines Pfades mit der niedrigsten kumulativen Verzögerung als den gesicherten Pfad.

5. Verfahren nach einem beliebigen der vorstehenden Ansprüche, wobei die Verfahrensschritte während des Intrusionsversuchs und/oder nach Ende des Intrusionsversuchs durchgeführt werden.

6. Verfahren nach Anspruch 1, weiterhin umfassend:
- Identifizieren eines oder mehrerer Intrusionsmeldesysteme (131), um auf dem Computernetzwerk übertragene Daten zu erfassen,
- Auswählen mindestens eines Intrusionsmeldesystems aus den ein oder mehreren Intrusionsmeldesystemen (131), wobei die Daten, die für den Intrusionsversuch indikativ sind, von dem ausgewählten mindestens einen Intrusionsmeldesystem empfangen werden.

7. Verfahren nach Anspruch 1, weiterhin umfassend:
- Speichern von Intrusionssignaturen von vorherigen Intusionen in vorherigen Verkehrspfaden in einer Datenbank und Assoziierten, für eine jede der Intrusionssignaturen, mindestens einer Rektifikationsmaßnahmensignatur, wobei die Rektifikationsmaßnahmensignatur die Erfordernis der Rektifikationsmaßnahme anzeigt,
- Vergleichen der empfangenen Daten mit den Intrusionssignaturen, und
- im Fall einer Übereinstimmung, Ermitteln, ob die Erfordernis der Rektifikationsmaßnahme in der verglichenen Rektifikationsmaßnahmensignatur angegeben ist.

8. Verfahren nach Anspruch 2, wobei die Anforderung an einem Pfadberechnungs-Client (119) empfangen wird, wobei die erste und die zweite Domain Teil von mehrfachen Domains (125) des Computernetzwerks sind, wobei mindestens eine Domain der mehrfachen Domains (125) ein Pfadberechnungselement (121) umfasst, wobei das Verfahren an dem Pfadberechnungs-Client (119) umfasst:
- Nach Empfang der Anforderung, Erzeugen einer Pfadberechnungsanforderungs- bzw. PCReq-Nachricht, wobei die PCReq-Nachricht die Nachricht ist,
- Auswählen eines Pfadberechnungselementes mit der minimalen aktuellen Nutzung von Berechnungsressourcen aus dem mindestens einen Pfadberechnungselement,
- Senden, über eine Anwendungsprogramm-Schnittstelle, der PCReq-Nachricht an das ausgewählte Pfadberechnungselement.

9. Verfahren nach Anspruch 8, wobei der Header der PCReq-Nachricht einen Indikator, welcher die Anforderung anzeigt, umfasst, wobei das Verfahren an dem Pfadberechnungselement (121) weiterhin umfasst:
- Basierend auf der Ermittlung, dass der Indikator für die Anforderung indikativ ist:
• Lesen, aus der PCReq-Nachricht, des Sicherheitsstufenwertes eines jeden Computerelementes des Computernetzwerks,
• Durchführen der Berechnung des gesicherten Pfades,
• Senden einer Pfadberechnungsantwort- bzw. PCRep-Nachricht, welche für den berechneten Pfad indikativ ist, an den Pfadberechnungs-Client (119), um den Verkehr gemäß dem gesicherten Pfad umzuleiten.

10. Verfahren nach einem beliebigen der vorstehenden Ansprüche, wobei das Verfahren als ein Dienst in einer Cloud-Computing-Umgebung bereitgestellt wird.

11. Computerprogramm-Produkt mit computerausführbaren Befehlen für die Durchführung der Verfahrensschritte des Verfahrens gemäß einem beliebigen der vorstehenden Ansprüche.

12. Pfadberechnungs-Client (119) eines Computernetzwerks, wobei das Computernetzwerk mehrfache Domains (125) und eine Analysevorrichtung (105) umfasst, wobei mindestens eine Domain der mehrfachen Domains (125) ein Pfadberechnungselement (121) umfasst, wobei der Pfadberechnungs-Client (119) für Folgendes ausgelegt ist:
- Empfangen, von der Analysevorrichtung (105), einer Anforderung für einen gesicherten Verkehrspfad als eine Alternative zu einem Verkehrspfad von einem ersten Knoten (123.1) einer ersten Domain (125.1) zu einem zweiten Knoten (123.2) einer zweiten Domain (125.n) der mehrfachen Domains (125),
- Erzeugen einer Pfadberechnungsanforderungs- bzw. PCReq-Nachricht, welche für zumindest einen Teil des VerkehrsPfades (129), der zu sichern ist, und einen Sicherheitsstufenwert mindestens einer Vielzahl von Computerelementen des Computernetzwerks (127), die in der empfangenen Anforderung enthalten sind, indikativ ist, wobei ein PCReq-Header einen Indikator, der die Anforderung anzeigt, umfasst,
- Setzen des Indikators, um die Anforderung anzuzeigen,
- Auswählen eines Pfadberechnungselements mit der minimalen aktuellen Nutzung von Berechnungsressourcen aus dem mindestens einen Pfadberechnungselement,
- Senden der PCReq-Nachricht an das ausgewählte Pfadberechnungselement.

13. System, umfassend den Pfadberechnungs-Client gemäß Anspruch 12 sowie ein Pfadberechnungselement (121) zum Berechnen eines gesicherten Verkehrspfades zwischen einem ersten Knoten (123.1) einer ersten Domain (125.1) und einem zweiten Knoten (123.n) einer zweiten Domain (125.n) eines Computernetzwerks (127), wobei das Pfadberechnungselement (121) für Folgendes ausgelegt ist:
- Empfangen, von einem Pfadberechnungs-Client (119), einer PCReq-Nachricht, welche für zumindest einen Teil eines Verkehrspfades (129) von dem ersten (123.1) zu dem zweiten Knoten (123.n), der zu sichern ist, und einen Sicherheitsstufenwert eines jeden Computerelementes des Computernetzwerks (127) indikativ ist, wobei der PCReg-Header einen Indikator, welcher eine Anforderung für den gesicherten Verkehrspfad anzeigt, umfasst,
- basierend auf einer Ermittlung, dass der Indikator für die Anforderung indikativ ist:
i. Lesen, aus der PCReq-Nachricht, des Sicherheitsstufenwertes eines jeden Computerelementes des Computernetzwerks (127),
ii. Berechnen des gesicherten Pfades von dem ersten Knoten (123.1) zu dem zweiten Knoten (123.n) unter Verwendung des Sicherheitsstufenwertes eines jeden Computerelementes des Computernetzwerks (127)"
iii. Senden einer Pfadberechnungsantwort- bzw. PCRep-Nachricht, welche für den berechneten Pfad indikativ ist.

14. Analysevorrichtung (105) zur Sicherung von Verkehr auf einem Verkehrspfad (129) von einem ersten Knoten (123.1) einer ersten Domain (125.1) zu einem zweiten Knoten (123.n) einer zweiten Domain (125.n) eines Computernetzwerks (127), wobei die Analysevorrichtung (105) für Folgendes ausgelegt ist:
a. Empfangen von Daten, welche für einen Intrusionsversuch in mindestens einem Teil des VerkehrsPfades (129) indikativ sind;
b. Ermitteln, auf der Basis der empfangenen Daten, ob eine Rektifikationsmaßnahme für das Computernetzwerk (127) erforderlich ist;
c. Anfordern eines gesicherten Pfades für den Verkehr als eine Alternative zu dem Verkehrspfad (129) auf der Basis einer Ermittlung, dass die Rektifikationsmaßnahme erforderlich ist, wobei die Anforderung die Übertragung einer Nachricht, welche den zumindest einen Teil des VerkehrsPfades, der zu sichern ist, und einen Sicherheitsstufenwert mindestens einer Vielzahl von Computerelementen des Computernetzwerks (127) zur Berechnung des gesicherten Pfades für den Verkehr, welcher den ersten Knoten (123.1) über ein oder mehrere Computerelemente der zumindest einen Vielzahl von Computerelementen mit dem zweiten Knoten (123.n verbindet, angibt, bewirkt, wobei der Sicherheitsstufenwert für die Sicherheitsschwachstelle des Computerelements indikativ ist.

## Revendications

1. Procédé pour sécuriser le trafic sur un chemin de trafic (129) entre un premier noeud (123.1) d'un premier domaine (125.1) et un deuxième noeud (123.n) d'un deuxième domaine (125.n) d'un réseau informatique (127), le procédé comprenant les étapes suivantes :
- recevoir, au moyen d'un dispositif d'analyse (105) du réseau informatique (127), des données indiquant une tentative d'intrusion dans au moins une partie du chemin de trafic (129) ;
- déterminer si une action de rectification est requise pour le réseau informatique (127) en fonction des données reçues ;
- demander, au moyen du dispositif d'analyse (105), un chemin sécurisé pour le trafic comme alternative du chemin de trafic en fonction d'une détermination selon laquelle l'action de rectification est requise, dans lequel la demande entraîne la transmission par le dispositif d'analyse (105) d'un message qui indique l'au moins une partie du chemin de trafic à sécuriser et une valeur de niveau de sécurité d'au moins une pluralité d'éléments informatiques du réseau informatique (127) pour calculer le chemin sécurisé pour le trafic reliant le premier noeud (123.1) au deuxième noeud (123.n) par l'intermédiaire d'un ou de plusieurs éléments informatiques de l'au moins une pluralité d'éléments informatiques, dans lequel la valeur de niveau de sécurité indique la vulnérabilité de la sécurité de l'élément informatique.

2. Procédé selon la revendication 1, dans lequel la demande est effectuée en utilisant un protocole d'élément de calcul de chemin et/ou un protocole de machine virtuelle.

3. Procédé selon la revendication 1 ou 2, comprenant les étapes suivantes :
- attribuer une valeur de classement à chaque élément informatique de l'au moins une pluralité d'éléments informatiques en fonction de la fréquence à laquelle chaque élément informatique du réseau informatique (127) est introduit,
- déterminer la valeur de niveau de sécurité de chaque élément informatique de l'au moins une pluralité d'éléments informatiques conformément à la valeur de classement, dans lequel plus la fréquence est faible plus la valeur de niveau de sécurité est élevée.

4. Procédé selon l'une quelconque des revendications 1 à 3, comprenant les étapes suivantes :
- déterminer un premier et un deuxième seuils de niveau de sécurité,
- calculer un ensemble intermédiaire de chemins possibles entre le premier noeud (123.1) et le deuxième noeud (123.n), dans lequel chaque élément informatique de chaque chemin de l'ensemble de chemins présente une valeur de niveau de sécurité supérieure à la première valeur seuil,
- calculer pour chaque chemin de l'ensemble de chemins la somme des valeurs de niveau de sécurité de chaque élément informatique du chemin,
- sélectionner un sous-ensemble de chemins de l'ensemble de chemins, dans lequel chaque chemin du sous-ensemble de chemins présente la somme calculée supérieure à la deuxième valeur seuil,
- calculer pour chaque chemin du sous-ensemble de chemins un retard accumulé pour acheminer le trafic à partir du premier noeud (123.1) vers le deuxième noeud (123.n),
- sélectionner comme chemin sécurisé du sous-ensemble de chemins un chemin présentant le retard accumulé le plus faible.

5. Procédé selon l'une quelconque des revendications précédentes, dans lequel les étapes du procédé sont exécutées durant la tentative d'intrusion et/ou une fois que la tentative d'intrusion est terminée.

6. Procédé selon la revendication 1, comprenant en outre les étapes suivantes :
- identifier un ou plusieurs systèmes de détection d'intrusion (131) pour capturer des données transmises sur le réseau informatique,
- sélectionner au moins un système de détection d'intrusion du ou des systèmes de détection d'intrusion (131), dans lequel les données indiquant la tentative d'intrusion proviennent de l'au moins un système de détection d'intrusion sélectionné.

7. Procédé selon la revendication 1, comprenant en outre les étapes suivantes :
- stocker des signatures d'intrusion d'intrusions précédentes dans des chemins de trafic précédents dans une base de données, pour chacune des signatures d'intrusion associant au moins une signature d'action de rectification, dans lequel la signature d'action de rectification indique la nécessité de l'action de rectification,
- mettre en correspondance les données reçues avec les signatures d'intrusion, et
- en cas de correspondance positive, déterminer si la nécessité de l'action de rectification est indiquée dans la signature d'action de rectification associée.

8. Procédé selon la revendication 2, dans lequel la demande est reçue au niveau d'un client de calcul de chemin (119), dans lequel les premier et deuxième domaines font partie de domaines multiples (125) du réseau informatique, dans lequel au moins un domaine des domaines multiples (125) comprend un élément de calcul de chemin (121), le procédé comprenant en outre, au niveau du client de calcul de chemin (119), les étapes suivantes :
- lors de la réception de la demande, générer un message de demande de calcul de chemin, PCReq, dans lequel le message PCReq est le message,
- sélectionner un élément de calcul de chemin avec une utilisation réelle minimale de ressources informatiques à partir de l'au moins un élément de calcul de chemin,
- envoyer, par l'intermédiaire d'une interface de programme d'application, le message PCReq à l'élément de calcul de chemin sélectionné.

9. Procédé selon la revendication 8, dans lequel l'en-tête du message PCReq comprend un indicateur qui indique la demande, le procédé comprenant en outre, au niveau de l'élément de calcul de chemin (121), les étapes suivantes :
- en fonction d'une détermination selon laquelle l'indicateur indique la demande :
• lire dans le message PCReq la valeur de niveau de sécurité de chaque élément informatique du réseau informatique,
• effectuer le calcul du chemin sécurisé,
• envoyer au client de calcul de chemin (119) un message de réponse de calcul de chemin, PCRep, indiquant le chemin calculé pour rediriger le trafic selon le chemin sécurisé.

10. Procédé selon l'une quelconque des revendications précédentes prévu comme un service dans un environnement informatique en nuage.

11. Produit de programme informatique comprenant des instructions exécutables par un ordinateur permettant d'exécuter les étapes du procédé selon l'une quelconque des revendications précédentes.

12. Client de calcul de chemin (119) pour un réseau informatique, le réseau informatique comprenant des domaines multiples (125) et un dispositif d'analyse (105), au moins un domaine des domaines multiples (125) comprenant un élément de calcul de chemin (121), le client de calcul de chemin (119) étant adapté pour
- recevoir une demande à partir du dispositif d'analyse (105) pour un chemin de trafic sécurisé comme alternative d'un chemin de trafic entre un premier noeud (123.1) d'un premier domaine (125.1) et un deuxième noeud (123.2) d'un deuxième domaine (125.n) des domaines multiples (125),
- générer un message de demande de calcul de chemin, PCReq, indiquant au moins une partie du chemin de trafic (129) à sécuriser et une valeur de niveau de sécurité d'au moins une pluralité d'éléments informatiques du réseau informatique (127) contenus dans la demande reçue, dans lequel un en-tête PCReq comprend un indicateur qui indique la demande,
- régler l'indicateur pour indiquer la demande,
- sélectionner un élément de calcul de chemin avec une utilisation réelle minimale de ressources informatiques à partir de l'au moins un élément de calcul de chemin,
- envoyer, à l'élément de calcul de chemin sélectionné, le message PGReq.

13. Système comprenant le client de calcul de chemin selon la revendication 12 et un élément de calcul de chemin (121) pour calculer un chemin de trafic sécurisé entre un premier noeud (123.1) d'un premier domaine (125.1) et un deuxième noeud (123.n) d'un deuxième domaine (125.n) d'un réseau informatique (127), l'élément de calcul de chemin (121) étant adapté pour :
- recevoir, à partir du client de calcul de chemin (119), un message PCReq indiquant au moins une partie d'un chemin de trafic (129) entre le premier noeud (123.1) et le deuxième noeud (123.n) à sécuriser et une valeur de niveau de sécurité de chaque élément informatique du réseau informatique (127), dans lequel l'en-tête PCReq comprend un indicateur qui indique une demande du chemin de trafic sécurisé,
- en fonction d'une détermination selon laquelle l'indicateur indique la demande :
i. lire dans le message PCReq la valeur de niveau de sécurité de chaque élément informatique du réseau informatique (127),
ii. calculer le chemin sécurisé entre le premier noeud (123.1) et le deuxième noeud (123.n) en utilisant la valeur de niveau de sécurité de chaque élément informatique du réseau informatique (127),
iii. envoyer un message de réponse de calcul de chemin, PCRep, indiquant le chemin calculé.

14. Dispositif d'analyse (105) pour sécuriser le trafic sur un chemin de trafic (129) entre un premier noeud (123.1) d'un premier domaine (125.1) et un deuxième noeud (123.n) d'un deuxième domaine (125.n) d'un réseau informatique (127), le dispositif d'analyse (105) étant adapté pour :
a. recevoir des données indiquant une tentative d'intrusion dans au moins une partie du chemin de trafic (129) ;
b. déterminer si une quelconque action de rectification est requise pour le réseau informatique (127) en fonction des données reçues ;
c. demander un chemin sécurisé pour le trafic comme alternative du chemin de trafic (129) en fonction d'une détermination selon laquelle l'action de rectification est requise, dans lequel la demande entraîne la transmission d'un message qui indique l'au moins une partie du chemin de trafic à sécuriser et une valeur de niveau de sécurité d'au moins une pluralité d'éléments informatiques du réseau informatique (127) pour calculer le chemin sécurisé pour le trafic reliant le premier noeud (123.1) au deuxième noeud (123.n) par l'intermédiaire d'un ou de plusieurs éléments informatiques de l'au moins une pluralité d'éléments informatiques, dans lequel la valeur de niveau de sécurité indique la vulnérabilité de la sécurité de l'élément informatique.
